# EUROPÄISCHE PATENTSCHRIFT

(11) **EP 1 270 379 B1**
(45) Veröffentlichungstag und Bekanntmachung des Hinweises auf die Patenterteilung: **24.10.2007**
(21) Anmeldenummer: 02013776.6
(22) Anmeldetag: 21.06.2002
(51) Int. Cl.: B62D 25/10

(54) **Lufteinlasssystem für ein Fahrzeug und Fahrzeug**
Air intake system for a motor vehicle and motor vehicle
Système d'entrée d'air pour un véhicule et véhicule

(30) Priorität: 27.06.2001 US 893056
(43) Veröffentlichungstag der Anmeldung: 02.01.2003
(73) Patentinhaber: DEERE & COMPANY, Moline, Illinois 61265-8098 (US)
(72) Erfinder: Hall, Stanley Kermit, Godwin, NC 28344 (US); Harber, Neil Vincent, Benson, NC 27504 (US); Henson, Robert Alan, Willow Springs, NC 27592 (US); Jaramillo, Jennifer Lynn, Raleigh, NC 27606 (US); Witwer, Jeffrey David, Clayton, NC 27520 (US)
(74) Vertreter: Magin, Ludwig Bernhard

(56) Entgegenhaltungen:
- DE-A- 2 934 095
- FR-A- 2 356 533
- US-A- 4 341 277

## Beschreibung

Die Erfindung betrifft ein Lufteinlasssystem für ein Fahrzeug mit einem Kühlventilator sowie ein Fahrzeug, insbesondere ein Fahrzeug zur Rasen-, Garten- und Grundstückspflege.

Fahrzeuge und insbesondere Fahrzeuge zur Rasen-, Garten- und Grundstückspflege, wie beispielsweise Mähgeräte, werden häufig bei warmen Umgebungsbedingungen eingesetzt. Da diese Fahrzeuge üblicherweise flüssigkeitsgekühlte Motoren aufweisen, sind sie mit Kühlventilatoren und Wärmetauschern zur Kühlung der Flüssigkeit ausgestattet. Üblicherweise wird darüber hinaus Hydrauliköl bzw. -flüssigkeit verwendet, um Anbaugeräte bzw. angetriebene Hubzylinder etc. des Fahrzeugs anzutreiben. Diese Hydraulikflüssigkeit wird durch einen Ölkühler bzw. einen weiteren Wärmetauscher gekühlt.

Wenn die Messerbalken der durch das Fahrzeug gezogenen oder geschobenen Anbaugeräte Gras oder ähnlichen Pflanzenwuchs schneiden, werden trockene Grasabschnitte und ähnliches Fremdmaterial aufgewirbelt. Üblicherweise sind vor den Wärmetauschern, d.h. beispielsweise einem Kühlmittelkühler und/oder einem Ölkühler, Lufteinlassschirme bzw. -abdeckungen angeordnet, um eine Ansammlung von Material an den Wärmetauschern und somit Auswirkungen auf die Kühlung zu minimieren. Diese Lufteinlassabdeckungen dienen dazu, die Menge an in das Motorsystem eingesaugtem Fremdmaterial zu verringern.

Es ist bekannt, eine solche Lufteinlassabdeckung direkt vor dem Kühlventilator und den Wärmetauschern im Heck des Motorraums anzubringen. Solche Lufteinlassabdeckungen sind im Wesentlichen vertikal angeordnet. Da Staub und umherwirbelnde Partikel in der Nähe der Anbaugeräte und in unteren Bereichen der Fahrzeuge vorherrschen, resultiert eine solche Anordnung darin, dass die Lufteinlassabdeckung sich mit Fremdmaterial zusetzen und einer häufigen Wartung bedürfen.

Die US-B1-6,167,976 zeigt ein Fahrzeug bzw. ein Mähgerät, bei welchem die Lufteinlassabdeckung, um einem Zusetzen entgegenzuwirken, in einem vorderen Bereich des Motorraums direkt hinter einem Bedienersitz angeordnet ist. Durch eine solche Anordnung ist die Lufteinlassabdeckung zwar aufgewirbeltem Materialien weniger stark ausgesetzt, es kommt aber weiterhin zu Ansammlung von Material an der im Verhältnis kleinen Lufteinlassabdeckung.

Die US-B-4,341,277 zeigt eine Baummaschine mit einer oberhalb eines Motors vorgesehenen Haube, deren Oberseite bereichsweise perforiert ausgebildet ist, um einem Ventilator Luft zuzuführen.

Das der Erfindung zugrunde liegende Problem wird darin gesehen, dass bekannte Kühllufteinlasssysteme Lufteinlassabdeckungen aufweisen, die aufgewirbeltem Material derart stark ausgesetzt sind, dass sie häufig gewartet werden müssen, um einem Verstopfen vorzubeugen.

Dieses Problem wird erfindungsgemäß durch die Lehre der Patentansprüche 1 bzw. 6 gelöst, wobei in den weiteren Patentansprüchen die Lösung in vorteilhafter Weise weiterentwickelnde Merkmale aufgeführt sind.

Auf diese Weise wird ein Lufteinlasssystem für ein Fahrzeug zur Verfügung gestellt, welches eine Lufteinlassabdeckung mit einer vergrößerten Oberfläche aufweist. Diese vergrößerte Oberfläche wird durch eine hohlkörperförmige Ausbildung der Lufteinlassabdeckung erzielt. Durch die hohlkörperförmige Ausbildung erfolgt das Ansaugen von Luft über die Umfangsfläche der Lufteinlassabdeckung. Die Luft gelangt dann in das Innere der Lufteinlassabdeckung und wird über einen Endbereich desselben an einen Kühlventilator des Lufteinlasssystems weitergeleitet bzw. durch diesen angesaugt.

Das Lufteinlasssystem kann einen oder mehrere Wärmetauscher aufweisen. Bei einem solchen Wärmetauscher kann es sich beispielsweise um eine Kühleinrichtung für eine Motorkühlflüssigkeit, Schmierflüssigkeit oder für Hydraulikflüssigkeit bzw. -öl eines Hydrauliksystems handeln. Es ist auch denkbar, dass der Wärmetauscher einer Klimatisierungseinrichtung zugeordnet ist, um deren Kühlmittel zu kühlen.

Die Lufteinlassabdeckung kann beispielsweise durch ein Gitter oder ein perforiertes Flachmaterial, wie beispielsweise ein Blech oder durch einen Kunststoff, oder auch durch ein Geflecht gebildet werden. Allgemein ist die Lufteinlassabdeckung aber zumindest bereichsweise oder auch zumindest im Wesentlichen vollständig perforiert ausgebildet, so dass ein Luftstrom von der Umgebung in das Innere der hohlkörperförmigen Lufteinlassabdeckung erfolgen kann.

Die Lufteinlassabdeckung kann beliebig geformt sein. Eine besonders gut an die Abmessungen und den Aufbau eines Fahrzeugs angepasste Ausführung ergibt sich aber bei einer zumindest im Wesentlichen rechteckigen oder auch elliptischen Ausbildung.

Es begünstigt den Ansaugluftstrom zum Kühlventilator, wenn der dem mit dem Kühlventilator wirksam verbundene Endbereich der Lufteinlassabdeckung gegenüberliegende Endbereich verschlossen ausgebildet ist, so dass hier keine Luft entweichen kann. Es ist aber auch denkbar, dass auch dieser Bereich eine durchbrochene bzw. perforierte Oberfläche aufweist, zumindest in solchen Fällen, in denen nicht mit dem Ansaugen verunreinigter Luft bzw. umherwirbelnder Teilchen zu rechnen ist.

Ein derartiges Lufteinlasssystem kann an verschiedenartigen Fahrzeugen eingesetzt werden, welche unter Bedingungen betrieben werden, bei denen es zu Verunreinigungen von Lufteinlassabdeckungen bzw. eines Kühlventilators oder von Wärmetauschern kommen kann. Hierbei kann es sich beispielsweise um landwirtschaftliche Fahrzeuge, Baufahrzeuge oder Geländefahrzeuge handeln. Besonders geeignet ist ein solches Lufteinlasssystem aber für ein Fahrzeug zur Rasen-, Garten- und Grundstückspflege, da es bei solchen Fahrzeugen durch Anbaugeräte, wie Mähgeräte oder auch Kehreinrichtungen häufig zu Staubaufwirbelungen oder Verwirbelungen von geschnittenem oder anderem Material, beispielsweise Gras, Pflanzenabschnitten, Blättern etc., kommen kann.

Erstreckt sich die Lufteinlassabdeckung entlang der Fahrzeuglängsrichtung, so kann sie eine verhältnismäßig große Längserstreckung aufweisen, indem sie den Motorraum zumindest im Wesentlichen vollständig überdeckt.

Es ist insbesondere günstig, wenn die Lufteinlassabdeckung auf einer Oberseite des Fahrzeugs und hierbei in vorteilhafter Weise oberhalb des Motorraums angeordnet ist, da sich hierdurch eine hochgelegene Anordnung ergibt, welche einem In-Kontakt-Kommen mit herumwirbelndem Material, Staub oder geschnittenem Gras entgegenwirkt.

In der Zeichnung ist ein nachfolgend näher beschriebenes Ausführungsbeispiel der Erfindung dargestellt. Es zeigt:
- Fig. 1: eine rückwärtige Ansicht eines Fahrzeugs, wobei ein Blick auf einen Kühlventilator und einen Motorlufteinlass freigegeben wurde,
- Fig. 2: eine Seitenansicht des Fahrzeugs, wobei die Seitenverkleidungen abgenommen wurden, um den Motorraum freizulegen,
- Fig. 3: eine vergrößerte Darstellung einer Lufteinlassabdeckung,
- Fig. 3a: eine weitere Vergrößerung der Lufteinlassabdeckung aus Fig. 3,

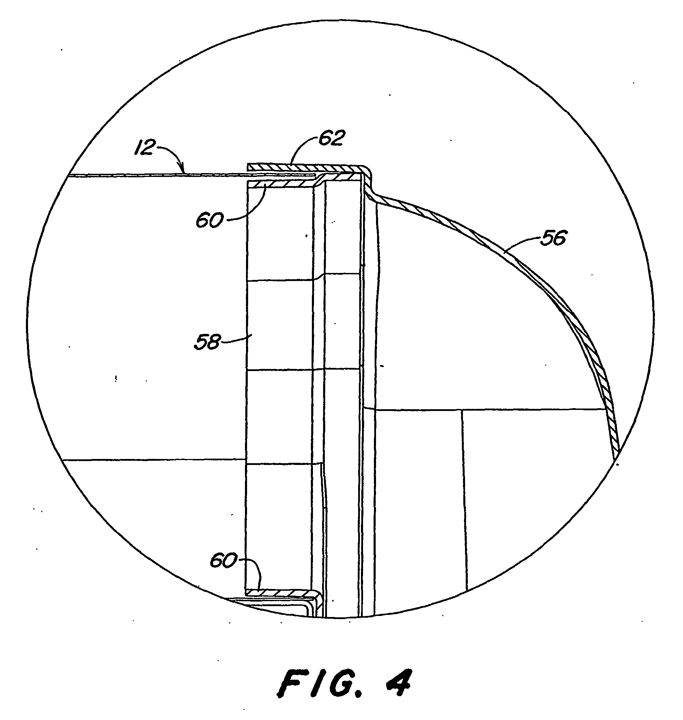

- Fig. 4: eine vergrößerte schematische Teilansicht einer Dichtfläche zwischen dem rückwärtigen Lufteinlasskanal bzw. einer Blende und der Lufteinlassabdeckung und
- Fig. 5: eine perspektivische Ansicht des Fahrzeugs von vorn.

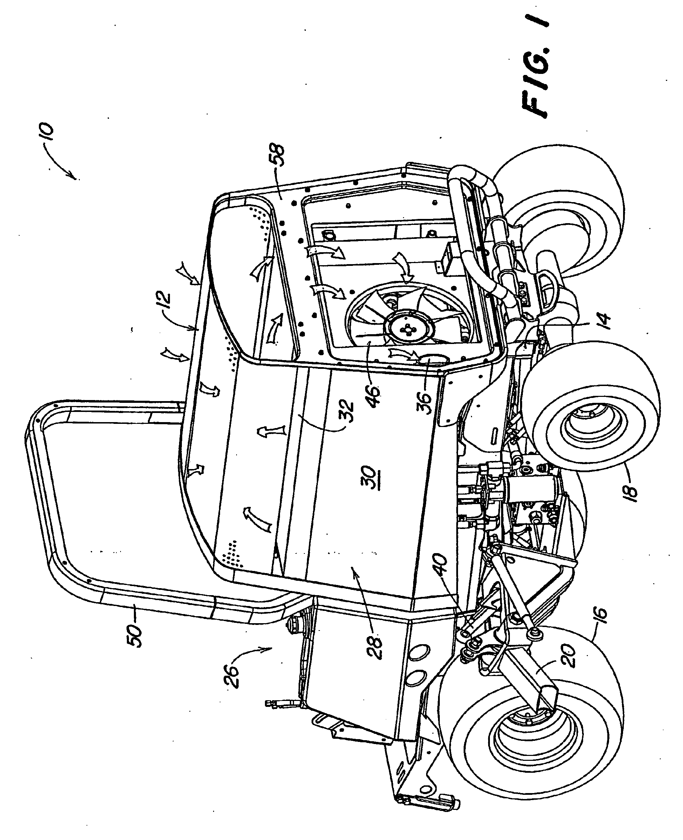

Es wird zuerst auf Figur 1 Bezug genommen, in der eine perspektivische Darstellung eines Frontmähers bzw. eines Fahrzeugs 10 gezeigt wird, welches eine rohr- bzw. hohlkörperförmige Lufteinlassabdeckung 12 entsprechend der vorliegenden Erfindung aufweist. Es sollte deutlich werden, dass weder alle Bauelemente der Bedienerplattform noch die Seiten- und Frontmähwerke gezeigt werden.

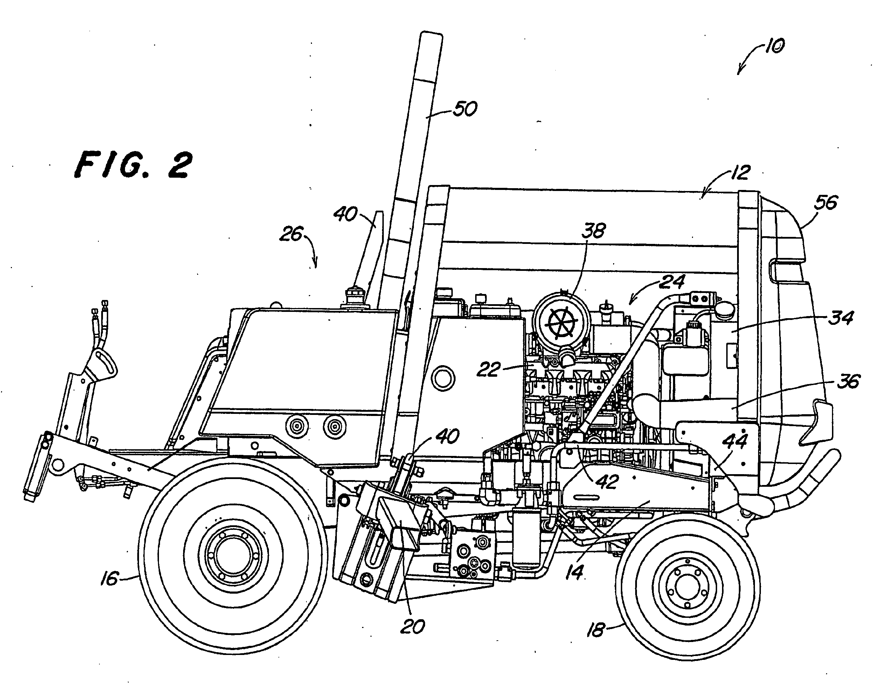

Das Fahrzeug 10 weist einen Rahmen 14 auf, welcher sich auf vorderen und rückwärtigen Rädern 16 und 18 abstützt. Der Rahmen 14 unterstützt weiter linke und rechte Anbaugerätehubeinrichtungen, wobei nur ein Teil der linken Hubeinrichtung 20 gezeigt wird. In einem rückwärtigen Bereich des Rahmens 14 ist ein Motor 22 vorgesehen. Wird nun auch Figur 2 betrachtet, kann ein in einem mittleren Bereich des Rahmens 14 hinter einer Bedienerplattform 26 vorgesehener Motorraum 24 gesehen werden, welcher von einer Haube 28 mit Seitenflächen 30 und einer Oberseite 32 umschlossen wird. Der Motor 22 der bevorzugten Ausführungsform ist flüssigkeitsgekühlt und mit einem Kühler bzw. Wärmetauscher 34 versehen, welcher in einem rückwärtigen Bereich des Motorraums 24 angeordnet ist. Der Motor 22 ist darüber hinaus mit einem Verdichtungslufteinlass bzw. einem Lufteinlass 36 versehen, welcher zu einem Luftfilter 38 oberhalb des Motors 22 führt.

Das Fahrzeug 10 weist auch ein Hydrauliksystem zum Antrieb von Hubzylindern 40 eines Mähwerks und anderer Leistungsempfänger des Fahrzeugs 10 auf. Ein Hydraulikflüssigkeitsspeicher des Fahrzeugs 10 ist mit einer Leitung 42 versehen, die zu einem Ölkühler bzw. einem zweiten Wärmetauscher 44 im Heck des Motorraums 24 führt. Diese Wärmetauscher 34, 44, d.h. der Wärmetauscher 34 für Flüssigkeit oder Wasser und der Wärmetauscher 44 des Hydraulikölsystems sind in der bevorzugten Ausführungsform vertikal übereinander angeordnet. Beide Wärmetauscher 34 und 44 sind vor einem Kühlventilator 46 im Heck des Motorraums 24 vorgesehen.

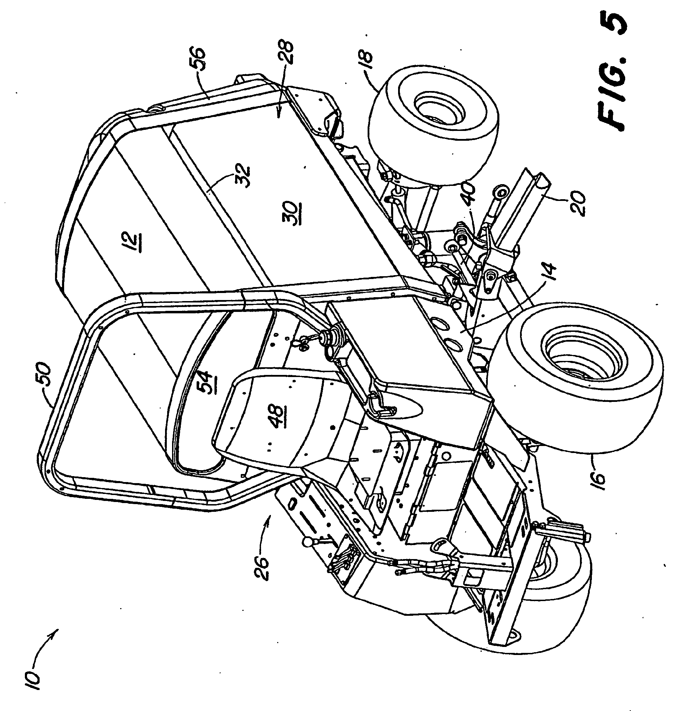

Es wird nun Figur 5 betrachtet, der entnommen werden kann, dass der vordere Endbereich des Fahrzeugs 10 mit einer Bedienerplattform 26 versehen ist, welche einen Sitz 48 und einen Überrollschutz 50 aufweist. Obwohl dies nicht gezeigt wird, wäre eine Bedienerplattform 26 mit Fusshebeln für Vorwärts- und Rückwärtsfahrt, Bremsen, einem Lenkrad, einem Gashebel o.ä. und anderen Steuerelementen ausgestattet.

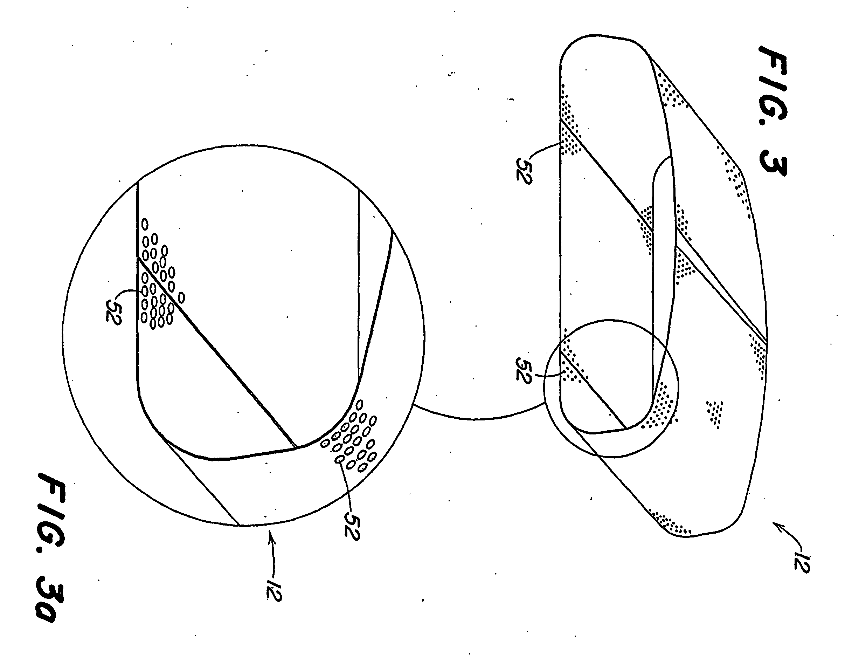

Es wird nun Figur 3 betrachtet, in der dargestellt wird, dass die hohlkörperförmige Lufteinlassabdeckung 12 im Wesentlichen elliptisch ausgebildet und in Längsrichtung verlängert ist. In der bevorzugten Ausführungsform ist die Lufteinlassabdeckung 12 aus durchbrochenem Stahl hergestellt und weist Lufteinlassöffnungen 52 über die gesamten 360° ihrer Außen- bzw. Umfangsfläche auf. An einem vorderen Endbereich der Lufteinlassabdeckung 12 blockiert eine Abdeckung 54 den Eintritt von Luft. Der rückwärtige Endbereich der Lufteinlassabdeckung 12 ist geöffnet und steht mit einem vertikalen Einlass oder einer Blende 56 in Verbindung, die an dem Heck des Fahrzeugs 10 entfernbar vorgesehen ist. Zurückschauend auf Figur 2 ist ersichtlich, dass wenn die Blende 56 an dem Heck des Fahrzeugs 10 angebracht ist, sie den Kühlventilator 46 und den Lufteinlasskanal 36 umschließt. Zwischen der Blende 56 und einer Rahmenstruktur 58 des Fahrzeugs 10 ist eine luftundurchlässige Dichtung vorgesehen.

Die Lufteinlassabdeckung 12 wird in montiertem Zustand dichtend zwischen einem inneren Flansch der Rahmenstruktur 48, welcher an dem Heck des Fahrzeugs 10 angeordnet ist, und einer äußeren Lippe 62 der Blende aufgenommen. Ein ähnlicher innerer und äußerer Flansch ist vorgesehen, um einen vorderen Endbereich der Lufteinlassabdeckung 12 zu sichern, wobei die Blende 54 vorgesehen ist, um einen Einlass ungefilterter Luft zu vermeiden.

Im Betrieb wird das Fahrzeug 10 verwendet, um linke und rechte sowie vordere Mähwerke zu tragen, um Gras und ähnliche Vegetation zu schneiden. Wenn das Fahrzeug 10 verwendet wird, werden Mähbalken das Gras anheben und schneiden. Auf diese Weise erzeugen die Mähbalken eine wesentliche Luftbewegung, welche bewirkt, dass trockene Grasabschnitte und Fremdmaterial um die Mähwerke und untere Bereiche des Fahrzeugs 10 wirbeln. Da die Lufteinlassabdeckung 12 in einem oberen Bereich des Fahrzeugs 10 angeordnet ist, werden weniger Abschnitte und Fremdmaterial in die Lufteinlassabdeckung 12 hineingezogen werden.

Die Lufteinlassabdeckung 12, welche nach oben und weg von dem Motorraum 24 beabstandet ist, wird Luft in ihren schachtartigen Einlasskanal von ihrer 360° Außen- bzw. Umfangsfläche ziehen. Mit solch einer großen Einlassfläche und mit einer Anordnung der Lufteinlassabdeckung 12 hoch über den Mähwerken, wird die Lufteinlassabdeckung 12 eine geringere Neigung aufweisen, zu verstopfen. Wenn der Kühlventilator 46 rotiert, zieht er Luft durch die Lufteinlassabdeckung 12, nach hinten durch die hohlkörperförmige Struktur der Lufteinlassabdeckung 12 und dann in der Blende 56 nach unten. Der Kühlventilator 46 ist hinter den vertikal übereinander angeordneten Wärmetauschern 34 und 44 angeordnet. In der bevorzugten Ausführungsform ist der Wärmetauscher 34 für das Wasser obenauf und der Wärmetauscher 44 für das Hydrauliköl darunter angeordnet.

Da die Lufteinlassabdeckung 12 Luft durch ihre 360° Außen- bzw. Umfangsfläche zieht, wird die Wahrscheinlichkeit, dass Fremdmaterial während des täglichen Betriebs ihre Öffnungen 52 füllt und verstopft, reduziert. Die erhöhte Anordnung der Lufteinlassabdeckung 12 dient auch dazu, ihr Herumwirbelndem-Fremdmaterial-ausgesetzt-Sein zu reduzieren. Wenn die Notwendigkeit für eine Bedienungsperson besteht, die Lufteinlassabdeckung 12 zu reinigen, verwendet sie nur einen Luftschlauch, um Fremdmaterialpartikel von den Öffnungen 52 zu blasen.

Die Motorabdeckung oder Haube 30 schwingt nach oben, um einen Zugang zu dem Kühlventilator 46, den Wärmetauschern 34 und 44, und inneren Bereichen der Lufteinlassabdeckung 12 zu erlauben. Für einen weiteren Zugang zu den inneren Bereichen der Lufteinlassabdeckung 12 kann die Blende 56 entfernt werden.

Durch die vorliegende Erfindung wird eine Lufteinlassabdeckung 12 mit einer beträchtlichen Oberfläche zur Verfügung gestellt, welche es einem erheblichen Luftvolumen erlaubt, dem Kühlventilator 46 zur Verfügung gestellt zu werden, um die Wärmetauscher 34 und 44 zu kühlen und um saubere Luft an den Motor 22 zu liefern. Durch die erhöhte Anordnung der Lufteinlassabdeckung 12 ist diese von herumwirbelndem Fremdmaterial entfernt, wodurch die Häufigkeit reduziert wird, mit der sich Material in den Öffnungen der Lufteinlassabdeckung 12 ansammelt. Entsprechend wird ein Überhitzen des Motors 22 und /oder des Hydrauliksystems verringert und die Zeitdauer zwischen Serviceintervallen zur Reinigung der Lufteinlassabdeckung 12 wesentlich verlängert.

Durch die Beschreibung der bevorzugten Ausführungsform wird es deutlich werden, dass verschiedene Modifikationen durchgeführt werden können, ohne von dem Bereich der Erfindung, wie er durch die folgenden Ansprüche bestimmt wird, abzuweichen.

## Patentansprüche

1. Lufteinlasssystem für ein Fahrzeug (10) mit einem Kühlventilator (46), **gekennzeichnet durch** eine hohlkörperartige Lufteinlassabdeckung (12), wobei ein erster Endbereich der Lufteinlassabdeckung (12) mit dem Kühlventilator (46) wirksam verbunden ist, und wobei die Lufteinlassabdeckung Lufteinlassöffnungen (52) über die gesamten 360° ihrer Außen-bzw. Umfangsfläche aufweist.

2. Lufteinlasssystem nach Anspruch 1, **gekennzeichnet durch** wenigstens einen Wärmetauscher (34, 44).

3. Lufteinlasssystem nach einem oder mehreren der vorherigen Ansprüche, **dadurch gekennzeichnet, dass** die Lufteinlassabdeckung (12) eine zumindest bereichsweise oder zumindest im Wesentlichen vollständig durchbrochene Umfangsfläche aufweist.

4. Lufteinlasssystem nach einem oder mehreren der vorherigen Ansprüche, **dadurch gekennzeichnet, dass** die Umfangsfläche zumindest im Wesentlichen rechteckig oder auch elliptisch ausgebildet ist.

5. Lufteinlasssystem nach einem oder mehreren der vorherigen Ansprüche, **dadurch gekennzeichnet, dass** ein zweiter Endbereich der Lufteinlassabdeckung (12), welcher vorzugsweise dem ersten Endbereich zumindest im Wesentlichen gegenüber angeordnet ist, zumindest im Wesentlichen verschlossen ist.

6. Fahrzeug (10), vorzugsweise ein Fahrzeug zur Rasen-, Garten- und Grundstückspflege mit einem Lufteinlasssystem nach einem oder mehreren der vorherigen Ansprüche.

7. Fahrzeug nach Anspruch 6, **dadurch gekennzeichnet, dass** sich die Lufteinlassabdeckung (12) in Fahrzeuglängsrichtung erstreckt.

8. Fahrzeug nach Anspruch 6 oder 7, **dadurch gekennzeichnet, dass** die Lufteinlassabdeckung (12) auf einer Oberseite bzw. oberhalb des Motorraums (24) des Fahrzeugs (10) angeordnet ist.

## Claims

1. Air intake system for a vehicle (10), having a cooling fan (46), **characterised by** a hollow body-like air intake cover (12), a first end region of the air intake cover (12) being connected effectively to the cooling fan (46) and the air intake cover having air intake openings (52) over the entire 360° of the outer or circumferential face thereof.

2. Air intake system according to claim 1, **characterised by** at least one heat exchanger (34, 44).

3. Air intake system according to one or more of the preceding claims, **characterised in that** the air intake cover (12) has a circumferential face which is interrupted at least in regions or at least substantially completely.

4. Air intake system according to one or more of the preceding claims, **characterised in that** the circumferential face has a configuration which is at least substantially rectangular or even elliptical.

5. Air intake system according to one or more of the preceding claims, **characterised in that** a second end region of the air intake cover (12), which is disposed preferably opposite the first end region at least substantially, is closed at least substantially.

6. Vehicle (10), preferably a vehicle for lawn, garden and plot maintenance, having an air intake system according to one or more of the preceding claims.

7. Vehicle according to claim 6, **characterised in that** the air intake cover (12) extends in the vehicle longitudinal direction.

8. Vehicle according to claim 6 or 7, **characterised in that** the air intake cover (12) is disposed on an upper side or above the engine compartment (24) of the vehicle (10).

## Revendications

1. Système d'admission d'air pour un véhicule (10) comportant un ventilateur de refroidissement (46), **caractérisé par** un chapeau d'admission d'air (12) en forme de corps creux, une première zone d'extrémité du chapeau d'admission d'air (12) étant reliée de manière active au ventilateur de refroidissement (46) et le chapeau d'admission d'air (12) comportant des orifices d'admission d'air (52) répartis sur la totalité des 360° de sa face extérieure ou face périphérique.

2. Système d'admission d'air selon la revendication 1, **caractérisé par** au moins un échangeur thermique (34, 44).

3. Système d'admission d'air selon une ou plusieurs des revendications précédentes, **caractérisé en ce que** le chapeau d'admission d'air (12) comporte une face périphérique perforée au moins par zones ou au moins sensiblement en totalité.

4. Système d'admission d'air selon une ou plusieurs des revendications précédentes, **caractérisé en ce que** la face périphérique est réalisée au moins sensiblement avec une forme rectangulaire ou également elliptique.

5. Système d'admission d'air selon une ou plusieurs des revendications précédentes, **caractérisé en ce qu'**une deuxième zone d'extrémité du chapeau d'admission d'air (12), qui est agencée de préférence au moins sensiblement en face de la première zone d'extrémité, est au moins sensiblement fermée.

6. Véhicule (10), de préférence un véhicule pour l'entretien des gazons, jardins et terrains, comportant un système d'admission d'air selon une ou plusieurs des revendications précédentes.

7. Véhicule selon la revendication 6, **caractérisé en ce que** le chapeau d'admission d'air (12) s'étend dans le sens longitudinal du véhicule.

8. Véhicule selon la revendication 6 ou 7, **caractérisé en ce que** le chapeau d'admission d'air (12) est monté sur un côté supérieur ou au-dessus de l'enceinte du moteur (24) du véhicule (10).
